# EUROPÄISCHE PATENTSCHRIFT

(11) **EP 1 555 077 B1**
(45) Veröffentlichungstag und Bekanntmachung des Hinweises auf die Patenterteilung: **14.02.2007**
(21) Anmeldenummer: 05100088.3
(22) Anmeldetag: 10.01.2005
(51) Int. Cl.: B23D 29/00

(54) **Motorisch betätigbares Schneidgerät**
Powered cutting device
Appareil de coupe actionné par moteur

(30) Priorität: 13.01.2004 DE 102004001807
(43) Veröffentlichungstag der Anmeldung: 20.07.2005
(73) Patentinhaber: Gustav Klauke GmbH, 42855 Remscheid (DE)
(72) Erfinder: Frenken, Egbert Dr., 52525 Heinsberg (DE)
(74) Vertreter: Müller, Enno

(56) Entgegenhaltungen:
- DE-U1- 9 401 672
- GB-A- 662 285
- US-A- 3 279 295
- US-A- 6 044 564

## Beschreibung

Die Erfindung betrifft ein motorisch betätigbares Schneidgerät, bspw. Kabelschneider, mit einer feststehenden Schneide und einer beweglichen Schneide, wobei die bewegliche Schneide über einen Arbeitskolben angetrieben ist. Ein Schneidgerät gemäß dem Oberbegriff von Anspruch 1 ist aus der GB 662 285 bekannt.

Schneidgeräte der in Rede stehenden Art sind bekannt, so insbesondere in Form von Kabelschneidern oder Blechscheren, welche elektromotorisch betätigbar sind. So wird bspw. auf die DE 199 26 481 A1 verwiesen. Diese Patentanmeldung beschreibt ein hydraulisches Arbeitsgerät mit einem Halterungskopf für gegeneinander bewegbare Werkzeuge, so bspw. Werkzeuge zum Verpressen oder Schneiden von Werkstücken. Im Falle von Schneidwerkzeugen sind diese in dem Halterungskopf seitlich versetzt zueinander angeordnet, um diese aneinander vorbei bewegen zu können.

Im Hinblick auf den zuvor beschriebenen Stand der Technik wird eine technische Problematik der Erfindung darin gesehen, ein Schneidgerät der in Rede stehenden Art weiter zu verbessern.

Diese Problematik wird durch den Gegenstand des Anspruches 1 gelöst. Zufolge dieser Ausgestaltung ist ein Schneidgerät der in Rede stehenden Art geschaffen, welches bei vereinfachtem Aufbau eine weiter vereinfachte Handhabbarkeit des Gerätes aufweist. Das Schneidgerät wirkt im Bereich der Schneiden in Art einer Schere. Der Arbeitskolben ist an der, um eine Schwenk-achse an der feststehenden Schneide gehalterten beweglichen Schneide angelenkt. Die hierbei im Zuge der Schwenkverlagerung der beweglichen Schneide zwangsläufig sich einstellende relative Radialbewegung des Arbeitskolben-Anlenkpunktes an der beweglichen Schneide ist durch die vorgeschlagene mögliche Auslenkung des Arbeitskolbens in Radialrichtung zu der Schwenk-achse ermöglicht. Es bedarf keiner umständlicher Umlenkung im Bereich der Arbeitskolben-Anlenkung an der beweglichen Schneide. Der die bewegliche Schneide antreibende Arbeitskolben ist bewusst kippbeweglich geführt. Der Kolben weist nur eine Gelenkverbindung mit der beweglichen Schneide auf und setzt sich ausgehend von der Gelenkverbindung als starre Stange in einen aufnehmenden Zylinder fort. Die Auslenkung des Arbeitskolbens in Radialrichtung zu der Schwenkachse erfolgt demzufolge erfindungsgemäß im Bereich des den Kolben aufnehmenden Zylinders. Innerhalb dieses Zylinders wird der Arbeitskolben hydraulisch angetrieben, wobei weiter zum Aufbau des zur Verlagerung des Arbeitskolbens benötigten Drucks ein Elektromotor vorgesehen sein kann. Die Anlenkung an die bewegliche Schneide ist so vorgenommen, dass der Arbeitskolben ausgehend von einer Endstellung, in welcher er nicht mit einer Zylinderachse fluchtend ausgerichtet ist, bei einer Bewegung in die gegenüberliegende Endstellung eine Ausrichtung mit der Zylinderachse durchläuft. So ist in einer bevorzugten Ausgestaltung der Arbeitskolben bzw. dessen Körperachse, welche sich in der zur Gelenkverbindung hinführenden starren Stange fortsetzt, in einer unbelasteten Endstellung, in welcher weiter bevorzugt die beiden Schneiden in einer Offenstellung gehalten sind, im Hinblick auf die Zylinderachse um einen Winkelwert von etwa 0,5 bis 3 Grad gekippt. Im Zuge der Bewegung in die gegenüberliegende, die Schneidstellung definierende Endstellung erfolgt eine Verkippung des Arbeitskolbens derart, dass dieser im Zuge dieser Bewegung etwa in einem ersten oder zweiten Drittel des Verlagerungsweges koaxial zur Zylinderachse ausgerichtet ist, um bei weiterer Verlagerung wieder aus dieser koaxialen Stellung herauszukippen. So kann weiter nach einem ersten Durchlaufen einer Ausrichtung mit der Zylinderachse der Arbeitskolben entgegen der Ausrichtung in der Ursprungsstellung kippen, so bspw. um einen Winkelwert von
-0,5 bis -5 Grad. In einer weiteren Ausbildung durchfährt der Arbeitskolben bzw. dessen Kolbenachse im Zuge einer Weiterverlagerung erneut eine Ausrichtung mit der Zylinderachse, um abschließend in der beaufschlagten Endstellung wieder gemäß der Ursprungsendstellung einen positiven Kippwinkel gegenüber der Zylinderachse aufzuweisen. In einer weiter bevorzugten Ausgestaltung ist der Zylinder zweigeteilt ausgebildet, wobei ein den Arbeitskolben halterndes Teil zugleich die Schneidmesser haltert. Zufolge dieser Ausgestaltung ist ein Schneidgerät der in Rede stehenden Art mit einem Wechselkopf ausbildbar, so bspw. zur Bereitstellung verschiedener Schneidköpfe, so weiter bspw. zur Bereitstellung eines Kabelschneiders und einer Blechschere, welche mit unterschiedlichen Schneidmessern versehen sind. Dieser mit dem zweiten Zylinderteil versehene Wechselkopf ist abnehmbar an dem ersten Zylinderteil halterbar, welcher erster Zylinderteil Bestandteil eines Handgerätes ist, über welches der Antrieb, d. h. die Beaufschlagung des Arbeitskolbens durchgeführt wird. Diesbezüglich wird ein Handgerät gemäß der DE 102 16 213 A1 bevorzugt. Hinsichtlich der im Zuge des Verfahrens in Radialrichtung zu der Schwenkachse der beweglichen Schneide kippbeweglichen Ausgestaltung des Arbeitskolbens ist weiter vorgesehen, dass dieser einen in dem Zylinder aufgenommenen Kolbenboden aufweist, der eine in Axialrichtung gekrümmte, zur Zusammenwirkung mit der Zylinderwandung vorgesehene Kontur aufweist. Der Kolbenboden kann insofern als Kugelfläche ausgebildet sein. Alternativ kann dieser aber auch in Form eines Zylinderabschnitts geformt sein, wobei zwischen diesem und der aufnehmenden Zylinderwandung ein maßlich geringer Ringspalt verbleibt. Der Kolbenboden weist eine umlaufende Ringnut mit darin aufgenommener Dichtung auf, zur Abdichtung des jenseits der starren Stange des Arbeitskolbens ausgebildeten und öldruckbeaufschlagten Raums. Es ist weiter vorgesehen, dass der Kolbenboden zweigeteilt ist und aus einem Kolbenschaft und einem diesen Kolbenschaft außenseitig umgebenden Dichtungstopf besteht. Der Kolbenschaft ist hierbei starr mit der an der beweglichen Schneide angelenkten starren Achse verbunden und ist weiter insbesondere bei einer erwähnten Ausgestaltung als Wechselkopf Bestandteil desselben. Der diesen Kolbenschaft außenseitig umgebende Dichtungstopf hingegen ist Bestandteil des der Verlagerung des Arbeitskolbens dienenden, motorisch betriebenen Geräts, so dass dieser, den Kolbenschaft des Wechselkopfes aufnehmende Dichtungstopf nach einem Abnehmen des Wechselkopfs von dem Zylinder in letzterem verbleibt und hierdurch weiterhin die Abdichtung zum druckbeaufschlagbaren Raum bestehen bleibt. Weiter weist bevorzugt dieser Dichtungskopf die in Axialrichtung gekrümmte, zur Zusammenwirkung mit der Zylinderwandung vorgesehene Kontur auf. Die Auslenkbarkeit des Arbeitskolbens in Radialrichtung zu der Schwenkachse ist demzufolge durch den Dichtungstopf erreicht. In dem Zylinder ist eine Rückstellfeder angeordnet, die auf den Kolbenschaft wirkt, so dass über diese Rückstellfeder eine Rückstellung des Systems in die unbelastete Grundstellung erreicht werden kann. Über den Kolbenschaft wird sogleich der Dichtungstopf zurückgedrängt. Weiter ist diese Rückstellfeder zwischen einer von der starren Stange durchsetzten Stirnwand des die Schneidmesser halternden Zylinderteils und dem Kolbenschaft gespannt, so dass diese Rückstellfeder auch Bestandteil eines Wechselkopfes ist. Die vorbeschriebenen erfindungsgemäßen Ausgestaltungen beziehen sich nicht nur auf einen angedeuteten Wechselkopf. Vielmehr ist die erfindungsgemäße Ausgestaltung sehr wohl auch auf ein erfindungsgemäßes Schneidgerät zu beziehen, welches mit einem nicht auswechselbaren Arbeitskopf versehen ist. Wie weiter bereits erwähnt, ist der Arbeitskolben hydraulisch beaufschlagt. Die bewegliche und/ oder feststehende Schneide weist eine gerundete Schneidkontur auf, wobei weiter bevorzugt in Längsrichtung der Schneide zwei hintereinander angeordnete, gerundete Schneidkonturen angeordnet sind. Diese gerundeten Schneidkonturen sind mit Bezug auf eine Schneidkante konkav ausgebildet. Bevorzugt ist jede Schneide im Bereich der Schneidkontur, bezogen auf eine gedachte, geradlinige Verbindungslinie zwischen Schneidenspitze und dem der Schwenkachse zugewandtem Schneidkonturende in drei in etwa gleichmäßige Schneiddrittel unterteilt, wobei von der Schwenkachse aus betrachtet die beiden gerundeten Schneidkonturen unmittelbar hintereinander angeordnet sind und die vordere gerundete Schneidkontur zur Schneidenspitze hin geradlinig ausläuft. Dieser geradlinig auslaufende Abschnitt bildet in diesem Sinne das letzte Drittel der gesamten Schneidkontur aus. Die Rundung der Schneidkontur ist an einem Radius orientiert, der etwa einem Viertel bis drei Viertel der Länge der Schneide entspricht. Die Länge der Schneide bezieht sich hierbei auf die wirksame Schneidenlänge. So ist bei einer beispielhaften Schneidenlänge von ca. 60 mm ein Rundungsradius einer jeden verrundeten Schneidkontur von ca. 20 - 25 mm gegeben. Die bewegliche und/ oder feststehende Schneide ist weiter bevorzugt in zwei Schneidbereiche gegliedert, die durch einen in den Schneid-raum ragenden Vorsprung unterteilt sind. Hierbei ist bevorzugt ein Schneidbereich durch die innere, d. h. der Schwenkachse zugewandte gerundete Schneidkontur ausgebildet. Den zweiten Schneidbereich formen die zweite Schneidkontur und der sich hieran anschließende zur Schneidenspitze hin geradlinig auslaufende Schneidenabschnitt. Diesbezüglich ist weiter vorgesehen, dass der der Schneidenspitze zugeordnete Schneidenbereich länger ist als der zweite Schneidenbereich. So ist bspw. ein Verhältnis von etwa zwei Drittel zu einem Drittel vorgesehen.

Nachstehend ist die Erfindung anhand der beigefügten Zeichnungen, welche lediglich zwei Ausführungsbeispiele darstellen, näher erläutert. Es zeigt:
- Fig. 1: ein erfindungsgemäßes motorisch betätigbares Schneidgerät in Ansicht, eine Grundstellung bei geöffneten Schneiden betreffend;
- Fig. 2: den herausvergrößerten Bereich II in Fig. 1, jedoch partiell geschnitten;
- Fig. 3: die Stirnansicht gegen das Schneidgerät, partiell geschnitten;
- Fig. 4: eine der Fig. 2 entsprechende Darstellung, jedoch eine Zwischenstellung im Zuge eines Verfahrens eines Arbeitskolbens in Richtung auf die Schneid-Endstellung betreffend;
- Fig. 5: den herausvergrößerten Bereich V in Fig. 4;
- Fig. 6: eine Folgedarstellung zur Fig. 4, die Schneid-Endstellung betreffend;
- Fig. 7: eine der Fig. 2 entsprechende Darstellung, jedoch eine zweite Ausführungsform betreffend;
- Fig. 8: eine weitere der Fig. 2 entsprechende Darstellung, betreffend eine dritte Ausführungsform;

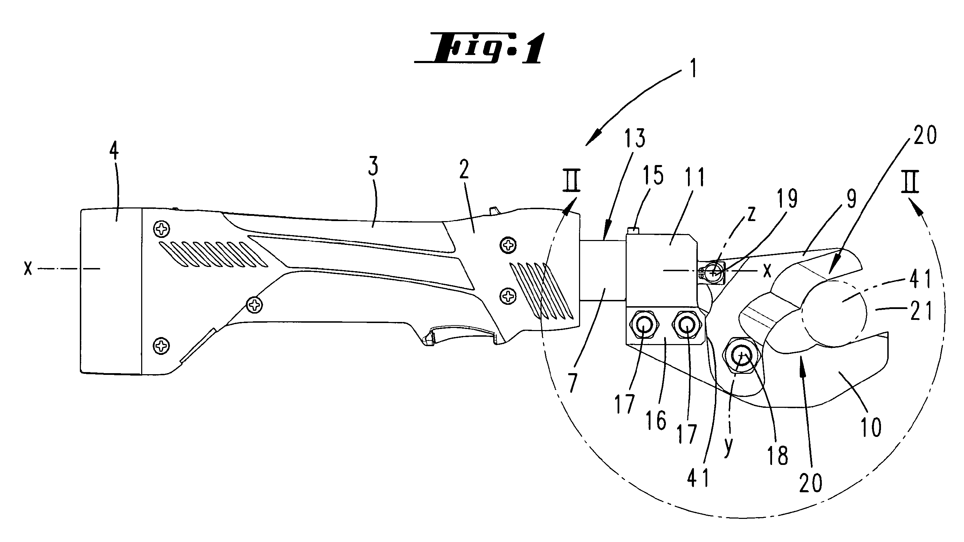

Dargestellt und beschrieben ist zunächst mit Bezug zu Fig. 1 ein zur Einhandbedienung geeignetes elektrohydraulisches Schneidgerät 1.

Wie aus den Darstellungen zu erkennen, ist das Schneidgerät 1 im Wesentlichen langgestreckt stabförmig ausgebildet, was die Einhandbedienung des Gerätes unterstützt. Diese stabförmige Ausgestaltung ist dadurch erreicht, dass die einzelnen Baugruppen im Gehäuse 2 des Gerätes 1 in axialer Hintereinander-Anordnung positioniert sind. Etwa im Mittenbereich des Gehäuses 2 ist ein nicht dargestellter Elektromotor vorgesehen. Im Bereich dieses Elektromotors formt das Gehäuse 2 einen Griffbereich 3 aus, wobei in diesem Griffbereich 3 der Gehäusedurchmesser ergonomisch angepasst gewählt ist.

Gespeist wird der Elektromotor von einem aufsteckbaren Akkumulator 3. Letzterer ist rastgesichert in einer nicht näher dargestellten Rastaufnahme des Gehäuses 2.

Mittels des Elektromotors wird in bekannter Weise in dem Gerät 1 über eine Öldruckerhöhung ein Arbeitskolben 5 entgegen der Kraft einer Rückstellfeder 6 bewegt. Hinsichtlich der weiteren Ausgestaltung zur hydraulischen Beaufschlagung des Arbeitskolbens 5 sowie zur allgemeinen Betätigung und Handhabbarkeit des stabförmigen Gerätes wird auf die bereits erwähnte DE 102 16 213 A1 verwiesen.

In Verlängerung der Geräteachse x ist konzentrisch zu dieser ein erstes Zylinderteil 7 an dem Gerät 1 angeformt, welches im Innern durch die Zylinderwandung 8 abgestützt den Arbeitskolben 5 entlang der Geräteachse x verschieblich aufnimmt. Das Gerät 1 ist wie erwähnt als Schneidgerät ausgebildet, so insbesondere in Form eines Kabelschneiders. Die diesbezüglichen beiden Schneiden 9 und 10 sind an einem weiteren zweiten Zylinderteil 11 gehaltert, welch letzteres zur lösbaren Verbindung auf das geräteseitige erste Zylinderteil 7 aufschraubbar ist. Hierzu weist das topfartige zweite Zylinderteil 11 einen dem Außendurchmesser des ersten Zylinderteils 7 angepassten Innendurchmesser auf, wobei in den zugewandten Innen- bzw. Außenwandungsabschnitten Gewindeausformungen vorgesehen sind, zur Bildung eines Aufschraubgewindes 12. Zufolge dessen ist das die Schneiden 9 und 10 tragende zweite Zylinderteil 11 koaxial zur Geräteachse x ausgerichtet an dem ersten Zylinderteil 7 festlegbar, wobei weiter das erste Zylinderteil 7 und das zweite Zylinderteil 11 zusammen den, den Arbeitskolben 5 aufnehmenden Zylinder 13 ausformen.

Die aufgeschraubte Stellung ist durch eine radial die Mantelwandung des zweiten Zylinderteils 11 durchsetzende und in eine umlaufende Ringnut 14 des ersten Zylinderteils 7 eingreifende Schraube 15 gesichert, wobei die Ringnut 14 in ihrem Breitenmaß so gewählt ist, dass trotz Gewindeeingriff eine Drehbarkeit des zweiten Zylinderteils 11 und somit auch der hieran gehalterten Schneiden 9 und 10 um 180 bis 360 Grad um die Geräteachse x erreicht werden kann.

Zur Halterung der feststehenden Schneide 10 ist außenwandig an dem zweiten Zylinderteil 11 ein radial abragender Ausleger 16 ausgebildet. An diesem ist die feste Schneide 10 mittels zweier sowohl den Ausleger 16 als auch einen zugeordneten Abschnitt der festen Schneide 10 durchsetzender Festlegungsschrauben 17 festgelegt.

Die feste Schneide 10 erstreckt sich ausgehend von dem Ausleger 16 unter Einbeziehung eines spitzen Winkels zur Geräteachse x mit Bezug zu den Zeichnungen nach unten; entfernt sich demzufolge ausgehend vom Ausleger 16 von dieser Geräteachse x, um im Schneidenwirkungsbereich zunächst in etwa parallel zur Geräteachse x und abschließend zur freien Schneidspitze hin wiederum in einem spitzen Winkel zur Geräteachse x auf diese hinzuweisen, wobei weiter die freie Schneidenspitze 18 dieser festen Schneide 10 weiter mit Bezug zu den Darstellungen unterhalb der Geräteachse x positioniert ist.

Die bewegliche Schneide 5 ist an der feststehenden Schneide 10 drehbeweglich um eine Schwenkachse y gehaltert, welche Schwenkachse y senkrecht zur Geräteachse x und senkrecht zur Ebenenerstreckung der feststehenden Schneide 10 ausgerichtet ist. Die Schwenkachse y ist körperlich gebildet durch eine die beiden Schneiden 9 und 10 durchsetzende Achsschraube 18.

Die Schwenkachse y ist im vom Ausleger 16 ausgehenden, gegenüber der Geräteachse x geneigten Abschnitt vor dem eigentlichen Schneidenbereich der feststehenden Schneide 10 angeordnet.

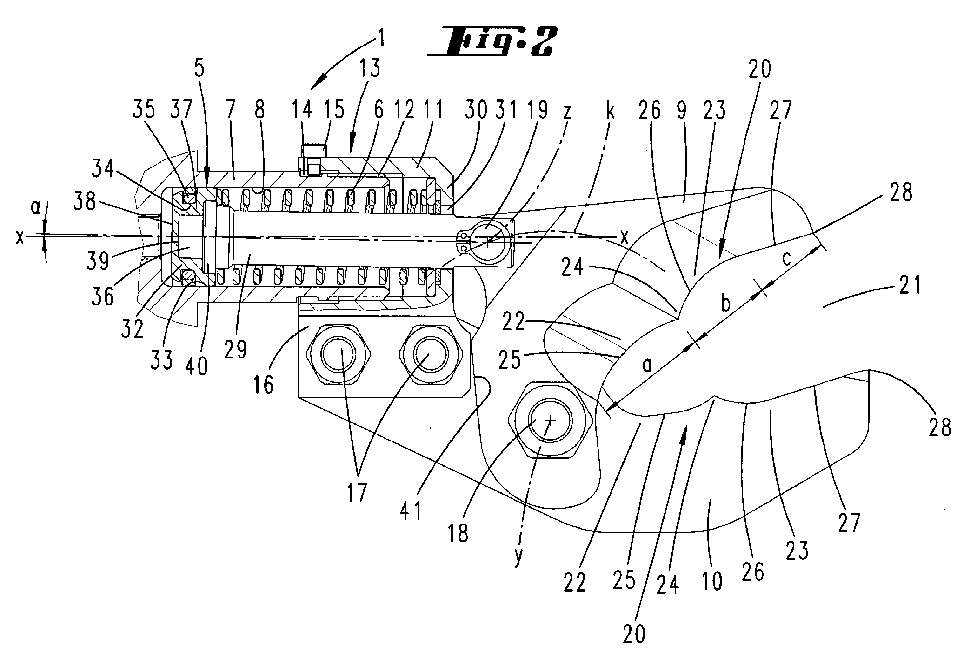

Die an der feststehenden Schneide 10 angelenkte bewegliche Schneide 9 ist im Grundriss bspw. gemäß der Darstellung in Fig. 2 in etwa einer Dreiecksform annähernd gestaltet, mit einem annähernden rechtwinkligen Bereich, in welchem eine Gelenkverbindung 19 zur Festlegung des Arbeitskolbens 5 ausgeformt ist. Die Schwenklagerung der beweglichen Schneide 9 ist in einem in Überdeckung zu der feststehenden Schneide 10 liegenden Eckbereich der beweglichen Schneide 9 gebildet.

Zwischen diesem, der Schwenkachse y zugeordneten Eckbereich und dem weiteren, freien Eckbereich der beweglichen Schneide 9 ist die in Wirkung tretende Schneidkante gebildet.

Die scherenartig zueinander angeordneten Schneiden 9 und 10 sind plan aneinander vorbeiführbar, wobei die Schneiden 9 und 10 jeweils eine gerundete Schneidkontur 20 aufweisen. Diese Schneidkonturen 20 sind bezogen auf eine den zwischen den beiden Schneiden 9 und 10 gebildeten Schneidraum 21 durchsetzende und die Schwenkachse y schneidende Raumachse spiegelsymmetrisch ausgebildet. Der erwähnte Schneidraum 21 ist zur der Schwenkachse y abgewandten Seite hin zumindest in der unbelasteten Grundstellung gemäß der Darstellung in Fig. 2 geöffnet. Konkret ist die Ausgestaltung dieser Schneidkonturen 20 so gewählt, dass sowohl die bewegliche Schneide 9 als auch die feststehende Schneide 10 in zwei Schneidbereiche 22, 23 gegliedert sind, welche jeweils durch einen in den Schneidraum 21 ragenden Vorsprung 24 unterteilt sind.

Der jeweils erste, der Schwenkachse y zugewandte Schneidbereich 22 ist gebildet durch eine konkav gerundete Schneidkontur 25, welche in dem dargestellten Ausführungsbeispiel mit einem Radius r₁ von etwa 20 bis 25 mm versehen ist. Diese an einem Kreislinienabschnitt orientierte erste Schneidkontur 25 erstreckt sich etwa über ein Winkelmaß von 65 bis 80 Grad, wobei das der Schwenkachse y zugewandte Ende der beweglichen Schneide 9 tangential übergeht in eine äußere Randkontur der beweglichen Schneide 9.

Der zweite Schneidbereich 23, welcher sich an den ersten Schneidbereich 22 anschließt, setzt sich zusammen aus einer zweiten, gleichfalls konkav ausgeformten Schneidkontur 26 und einem tangential aus dieser zweiten Schneidkontur 26 austretenden geradlinigen Schneidkante 27, welche sich bis zur Schneidenspitze 28 erstreckt. Der Radius r₂ der zweiten konkaven Schneidkontur 26 ist in dem dargestellten Ausführungsbeispiel mit etwa 20 mm bemessen, wobei sich diese über ein Winkelmaß von etwa 30 bis 45 Grad erstreckt.

Der zwischen den beiden konkav ausgeformten Schneidkonturen 25 und 26 gebildete Erhebungsabschnitt formt den zahnartigen Vorsprung 24 aus.

Entlang einer gedachten, den Anfang und das freie Ende an der Schneidenspitze 28 der Schneidkontur 20 verbindenden Geraden lässt sich die Schneidkontur 20 in drei hintereinander angeordnete Schneidenabschnitte nahezu gleichmäßig unterteilen. So entspricht die entlang dieser Geraden gemessene Länge a der ersten Schneidkontur 25 etwa dem 1- bis 1,5-Fachen, in dem dargestellten Ausführungsbeispiel etwa einem 1,2-Fachen der entlang derselben Geraden gemessenen Länge b der zweiten Schneidkontur 26, welche wiederum in dem vorgenannten Verhältnis zu der Länge c der geradlinigen Schneidkante 27 steht.

Im Bereich der Gelenkverbindung 19 ist eine mit dem Arbeitskolben 5 starr verbundene Kolbenstange 29 gelenkig an der beweglichen Schneide 9 angebunden, wobei eine Gelenkachse z parallel ausgerichtet ist zur Schwenkachse y.

Die Kolbenstange 29 durchsetzt ausgehend von der Gelenkverbindung 19 eine Stirnwand 30 des zweiten Zylinderteils 11, wozu in der Stirnwand 30 eine gegenüber der Kolbenstange 29 durchmesservergrößerte, zentrale Bohrung 31 vorgesehen ist.

Der in dem Zylinder 13, konkret in dem ersten Zylinderteil 7 aufgenommene Arbeitskolben 5 weist einen Kolbenboden 32 auf, der eine in Axialrichtung desselben gekrümmte, zur Zusammenwirkung mit der Zylinderwandung 8 vorgesehene Kontur 33 aufweist. So ist diese Kontur 33 bevorzugt als eine Teil-Kugelfläche ausgebildet, zufolge dessen eine Kippung des Arbeitskolbens 5 in dem Zylinder 13 um die Zylinder- bzw. Geräteachse x ermöglicht ist.

In üblicher Weise besitzt der Kolbenboden 32 eine umlaufende Ringnut 34, in welcher eine Dichtung 35 zur Zusammenwirkung mit der Zylinderwandung 8 einsitzt.

Der Kolbenboden 32 ist zweigeteilt und besteht aus einem Kolbenschaft 36 und einem diesen Kolbenschaft außenseitig umgebenden Dichtungstopf. Letzterer ist mit der in Axialrichtung gekrümmten Kontur 33 und mit der Dichtung 35 versehen. Weiter ist dieser Dichtungstopf 37 zur druckbeaufschlagten Seite hin mit einer geschlossenen Beaufschlagungsfläche 38 versehen. Zu der dieser gegenüberliegenden Seite hin besitzt der Dichtungstopf 37 eine stufenförmige, zentrale und im Grundriss kreisrunde Aufnahmeöffnung 39. In dieser sitzt das, den Kolbenschaft 36 ausformende freie Ende der Kolbenstange 29 anschlagbegrenzt und in Axialrichtung lösbar ein.

Entsprechend der stufenförmigen Ausgestaltung der Aufnahmeöffnung 39 ist auch an dem Kolbenschaft 36 eine gegenüber dem Durchmesser der Kolbenstange 29 radial vergrößerte Ringschulter 40 ausgeformt. An dieser stützt sich einerends die, die Kolbenstange 29 umfassende und andernends die Stirnwand 30 des zweiten Zylinderteils 11 beaufschlagende Rückstellfeder 6 ab.

Zufolge der zweigeteilten Ausgestaltung des Arbeitskolbens 5 ist das Schneidwerkzeug als Wechselvorsatz für das Gerät ausbildbar. Die beiden Schneiden 9, 10, das zweite Zylinderteil 11 sowie die Kolbenstange mit endseitigem Kolbenschaft 36 und die zwischen Kolbenschaft 36 und Stirnwand 30 des zweiten Zylinderteils 11 gefesselte Rückstellfeder 6 sind Bestandteil des Wechselvorsatzes. Der Dichtungstopf 37 des Arbeitskolbens 5 verbleibt auch nach Abnahme dieses Wechselvorsatzes in dem ersten Zylinderteil 7, so dass das hydraulisch geschlossene System innerhalb des Gerätes abgedichtet bleibt. Um bei abgenommenem Wechselvorsatz einem Austreten des Dichtungstopfes 37 bei versehentlicher Betätigung des Gerätes entgegenzuwirken, ist die Zylinderwandung 8 im Bereich ihres offenen Endes mit einer nicht dargestellten, nach radial innen weisenden Ringschulter oder dergleichen versehen, deren Innendurchmesser mindestens dem Außendurchmesser der diesen Bereich auch durchsetzenden Rückstellfeder 6 entspricht.

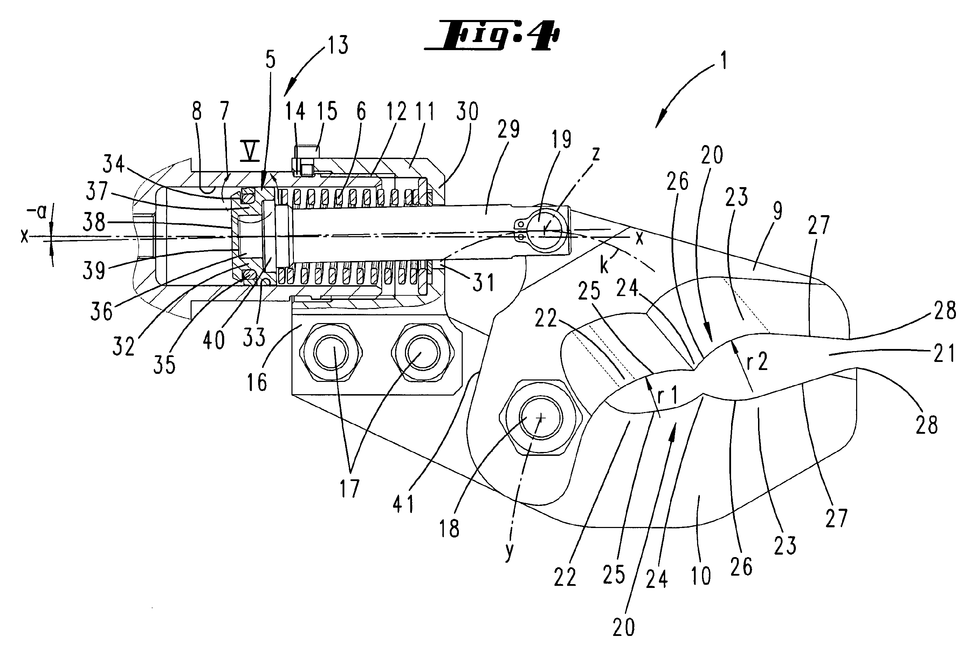

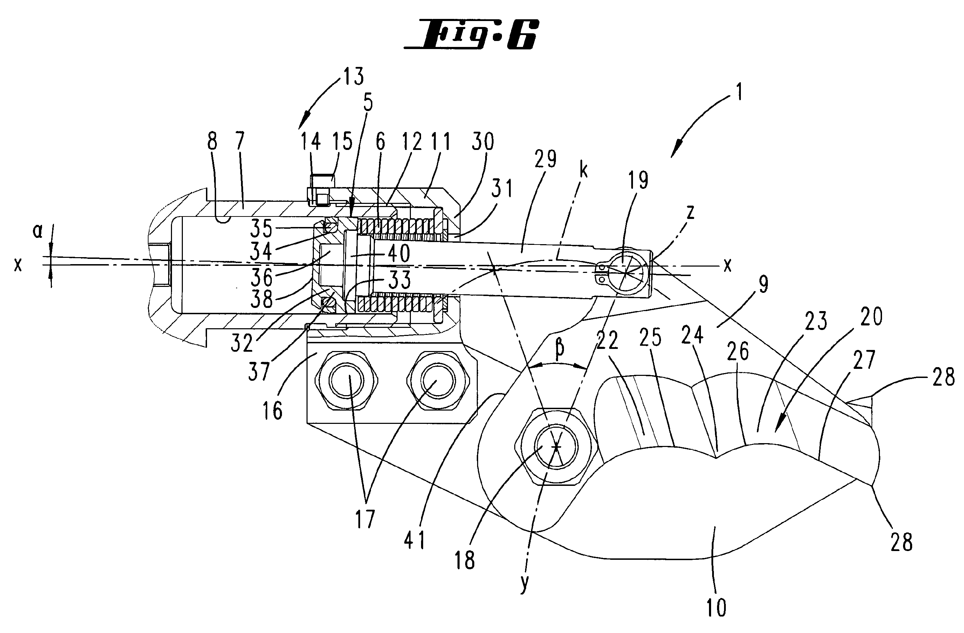

Die in der Bereitschaftsposition gemäß den Darstellungen in den Fig. 1 und 2, in welcher die Schneiden 9 und 10 eine Stellung einnehmen, in der der Schneidraum 21 zur Aufnahme eines zu schneidenden Werkstückes 41, bspw. eines Kabels, die größte Öffnungsweite aufweist, ist die Kolbenstange 29 und somit auch der formschlüssig mit dieser verbundene Dichtungstopf 37 bzw. der gesamte Arbeitskolben 5 um einen Winkelbetrag α von etwa 1 Grad zur Geräteachse x geneigt. Diese Position ist anschlagbegrenzt durch Abstützung eines Schneidenschenkels 42 der beweglichen Schneide 9 an dem Ausleger 16. Aus dieser Stellung heraus bewirkt eine hydraulische Beaufschlagung des Arbeitskolbens 5 eine Verlagerung desselben samt der Kolbenstange 29 innerhalb des Zylinders 13. Dies entgegen der Kraft der Rückstellfeder 6. Bei dieser Kolbenverlagerung folgt die Gelenkverbindung 19 zwischen Kolbenstange 29 und beweglicher Schneide 9 einem sich radial auf die Schwenkachse y beziehenden Kreisbogen k, zufolge dessen im Zuge der Axialverlagerung des Arbeitskolbens 5 und die Kolbenstange 29 zunächst eine Kippung derselben in eine koaxiale Ausrichtung zur Geräteachse x und über diese Stellung hinaus eine negative Kippung gemäß der Darstellung in Fig. 4 (vgl. Winkel -α) erfahren. Dieser Winkel -α entspricht in dem dargestellten Ausführungsbeispiel dem Winkel α in der Grundstellung, nämlich 1 Grad bzw. -1 Grad. Aus dieser unteren Kipp-Totpunktstellung des Arbeitskolbens 5 heraus erfolgt bei weiterer Schiebeverlagerung desselben in die Schneidenschließstellung gemäß der Darstellung in Fig. 6 unter erneutem Durchlaufen einer Ausrichtung mit der Zylinderachse bzw. Geräteachse x eine erneute Verkippung in entgegengesetzter Richtung bis zu einem Winkel α zwischen Kolbenstangenachse und Geräteachse x von ca. 1,5 Grad.

Der kreisbogenabschnittsförmige Weg, den die Gelenkverbindung 19 durchläuft, kann durch Kippen des Arbeitskolbens 5 in dem Zylinder 13 nachvollzogen werden. Die gekrümmte Kontur 33 im Bereich des Kolbenbodens 32 bietet auch während der Kippung eine ausreichende Abstützung des Arbeitskolbens 5 an der Zylinderwandung 8, dies unter Beibehaltung der Dichtigkeit gegenüber dem Druckraum.

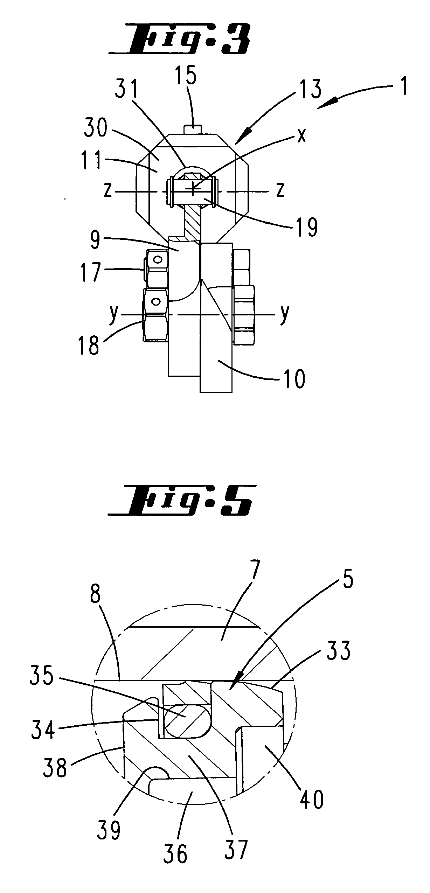

In dem in den Fig. 1- 6 dargestellten ersten Ausführungsbeispiel des Schneidgerätes 1 ist der Schneidraum 21 etwa parallel zur Geräteachse x, wenngleich auch parallel versetzt dazu ausgerichtet. Dies bedeutet, dass sich der Schneidraum 21 nach vorn, zur Gerätespitze hin öffnet.

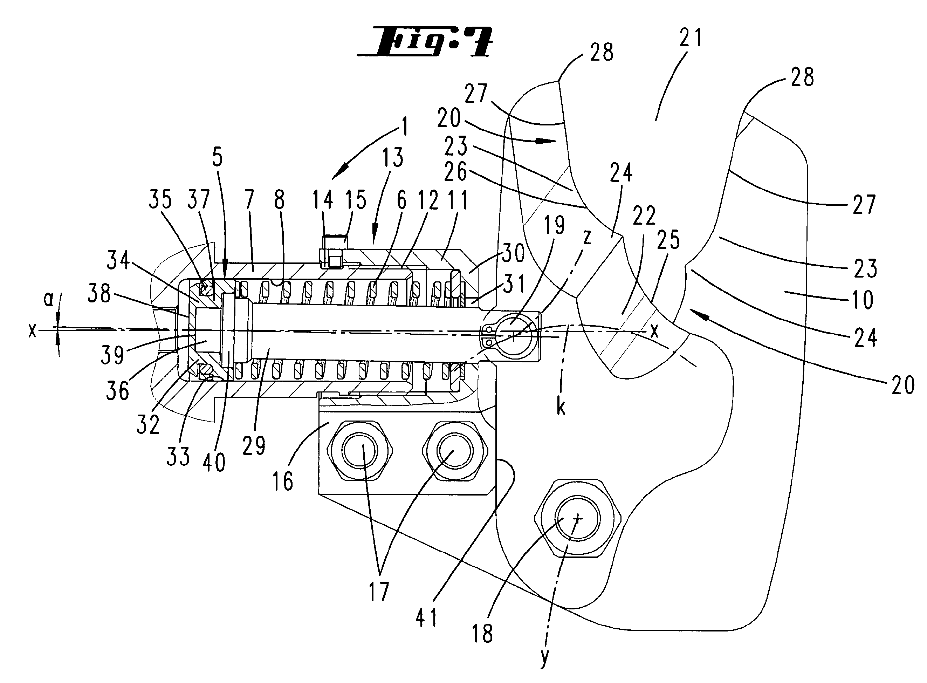

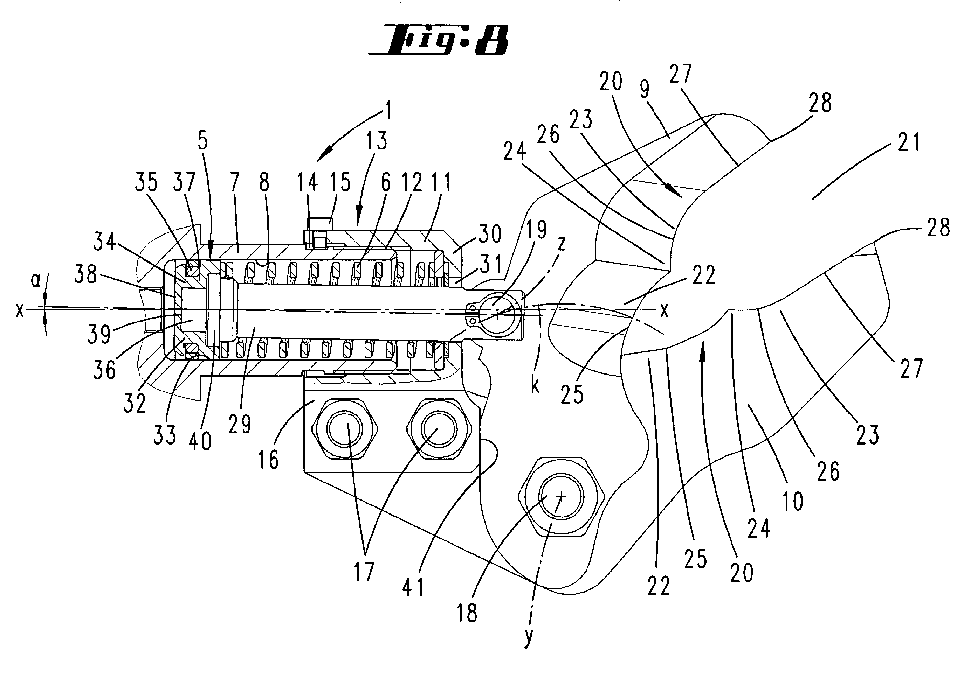

Die Fig. 7 und 8 zeigen alternative Ausgestaltungen eines Schneidgerätes 1, deren Funktion im Wesentlichen der der ersten Ausführungsform entspricht. Hier ist jedoch der Schneidraum 21 in etwa rechtwinklig (vgl. Fig. 7) bzw. etwa in einem Winkel von 45 Grad (vgl. Fig. 8) zur eigentlichen Geräteerstreckung ausgerichtet. In den Darstellungen in den Fig. 7 und 8 tragen mit Blick auf die zuvor beschriebene Ausführungsform gleiche Bauteile die gleichen Bezugszeichen.

Unabhängig von den jeweiligen dargestellten Ausführungsformen ist es von entscheidender Bedeutung, dass die Achse des nicht ausgelenkten, d. h. nicht im Zylinder 13 gekippten Arbeitskolbens 5, bei welcher Stellung die Kolbenachse zur Zylinderachse x fluchtet, eine Sekante zu dem Kreisbogen k bildet, welch letzterer ausgehend von der Drehachse y mit dem Radius zur Gelenkachse z gegeben ist. Der durch die Gelenkachse z gegebene Gelenkpunkt durchläuft im Zuge der Vorverlagerung des Arbeitskolbens 5 aus der unbelasteten Grundstellung in die gegenüberliegende Endstellung den Kreisbogenabschnitt k unter Einschließen eines Kreisbogenabschnitt-Winkels β von ca. 40 bis 45 Grad, wobei weiter der Gelenkpunkt den Zenit des Kreisbogenabschnitts durchläuft, welcher Zenit ein radiales Abstandsmaß zu der Kolbenachse in der nicht ausgelenkten Stellung des Arbeitskolbens 5 besitzt, das etwa 3 bis 10 %, bevorzugt 5 % des Radialmaßes ist.

Des Weiteren kann die Anordnung abweichend von den Darstellungen auch so gewählt sein, dass die Schneiden 9, 10 nicht Bestandteil eines abnehmbaren Vorsatzes sind, sondern vielmehr direkt an dem fest mit dem Gerät verbund e-nen Zylinder 13 gehaltert sind. In diesem Fall kann auch ein üblicher, einteiliger Arbeitskolben 5 zur Anwendung kommen, der mit der die benötigte Kippung zulassenden gekrümmten Kontur 33 versehen ist.

## Patentansprüche

1. Motorisch betätigbares Schneidgerät (1), bspw. Kabelschneider, mit einer feststehenden Schneide (10) und einer beweglichen Schneide (9), wobei die bewegliche Schneide (9) hydraulisch über einen Arbeitskolben (5) angetrieben ist, der in einem zu dem Schneidgerät (1) feststehenden Zylinder (13) geführt ist, wobei weiter die bewegliche Schneide (9) drehbeweglich, um eine Schwenkachse (y) drehend, an der feststehenden Schneide (10) gehaltert ist und der Arbeitskolben (5) mit der beweglichen Schneide (9) gelenkverbunden ist, **dadurch gekennzeichnet, dass** der Arbeitskolben (5) nur mittels einer einzigen Gelenkverbindung (19) mit der beweglichen Schneide (9) verbunden ist und sich ausgehend von der Gelenkverbindung (19) als starre Stange (29) in einen aufnehmenden Zylinder (13) fortsetzt, wobei im Zuge seines Verfahrens im Zylinder (13) eine Auslenkung in Radialrichtung zu der Schwenkachse (y) erfolgt.

2. Schneidgerät nach Anspruch 1, **dadurch gekennzeichnet, dass** die Anlenkung an die bewegliche Schneide (9) so vorgenommen ist, dass der Arbeitskolben (5) ausgehend von einer Endstellung, in welcher er nicht mit einer Zylinderachse (y) fluchtend ausgerichtet ist, bei einer Bewegung in die gegenüberliegende Endstellung eine Ausrichtung mit der Zylinderachse (x) durchläuft.

3. Schneidgerät nach Anspruch 1 oder 2, **dadurch gekennzeichnet, dass** der Zylinder (13) zweigeteilt ausgebildet ist, wobei ein den Arbeitskolben (5) halterndes Teil (11) zugleich die Schneiden (9, 10) haltert.

4. Schneidgerät nach einem der Ansprüche 1 bis 3, **dadurch gekennzeichnet, dass** der Arbeitskolben (5) einen in dem Zylinder (13) aufgenommenen Kolbenboden (32) aufweist, der eine in Axialrichtung gekrümmte, zur Zusammenwirkung mit der Zylinderwandung (8) vorgesehene Kontur (33) aufweist.

5. Schneidgerät nach Anspruch 4, **dadurch gekennzeichnet, dass** der Kolbenboden (32) eine umlaufende Ringnut (34) mit darin aufgenommener Dichtung (35) aufweist.

6. Schneidgerät einem der Ansprüche 4 oder 5, **dadurch gekennzeichnet, dass** der Kolbenboden (32) zweigeteilt ist und aus einem Kolbenschaft (36) und einem diesen Kolbenschaft (36) außenseitig umgebenden Dichtungstopf (37) besteht.

7. Schneidgerät nach einem der Ansprüche 1 bis 6, **dadurch gekennzeichnet, dass** in dem Zylinder (13) eine Rückstellfeder (6) angeordnet ist,-die auf den Kolbenschaft (36) wirkt.

8. Schneidgerät nach einem der Ansprüche 1 bis 7, **dadurch gekennzeichnet, dass** die bewegliche und/oder feststehende Schneide (9, 10) eine gerundete Schneidkontur (20) aufweist.

9. Schneidgerät nach Anspruch 8, **dadurch gekennzeichnet, dass** in Längsrichtung der Schneide (9, 10) zwei hintereinander angeordnete, gerundete Schneidkonturen (25, 26) angeordnet sind.

10. Schneidgerät nach einem der Ansprüche 8 oder 9, **dadurch gekennzeichnet, dass** die vordere gerundete Schneidkontur (26) zur Schneidenspitze (28) hin geradlinig ausläuft.

11. Schneidgerät nach einem der Ansprüche 8 bis 10, **dadurch gekennzeichnet, dass** die Rundung der Schneidkontur (25, 26) an einem Radius (r₁, r₂) orientiert ist, der etwa einem Viertel bis drei Viertel der Länge der Schneide (9, 10) entspricht.

12. Schneidgerät nach der Ansprüche 1 bis 7, **dadurch gekennzeichnet, dass** die bewegliche Schneide (9) und/ oder die feststehende Schneide (10) in zwei Schneidbereiche (22, 23), die durch einen in den Schneidraum (21) ragenden Vorsprung (24) unterteilt sind, gegliedert sind.

13. Schneidgerät nach Anspruch 12, **dadurch gekennzeichnet, dass** der der Schneidenspitze (28) zugeordnete Schneidenbereich (23) länger ist als der zweite Schneidenbereich (22).

## Claims

1. Motor-actuatable cutting apparatus (1) or cable cutter, having a fixed blade (10) and a movable blade (9), wherein the movable blade (9) is driven hydraulically via a working piston (5) which is guided in a cylinder (13) fixed to the cutting apparatus (1), wherein also the movable blade (9) is supported on the fixed blade (10) to be moved in rotary manner, rotating about a pivoting axis (y), and the working piston (5) is hinge-connected to the movable blade (9), **characterised in that** the working piston (5) is connected to the movable blade (9) only by means of a single hinge connection (19) and starting from the hinge connection (19) continues as a rigid rod (29) into a receiving cylinder (13), wherein in the course of its movement in the cylinder (13), deflection takes place in radial direction to the pivoting axis (y).

2. Cutting apparatus according to claim 1, **characterised in that** pivoting is carried out at the movable blade (9) so that the working piston (5), starting from an end position in which it is not aligned flush with a cylinder axis (y), during a movement into the opposite end position, passes through alignment with the cylinder axis (x).

3. Cutting apparatus according to claim 1 or 2, **characterised in that** the cylinder (13) is designed to have two parts, wherein one part (11) supporting the working piston (5) at the same time supports the blades (9, 10).

4. Cutting apparatus according to one of claims 1 to 3, **characterised in that** the working piston (5) has a piston base (32) accommodated in the cylinder (13), which has a contour (33) curved in axial direction and provided for cooperation with the cylinder wall (8).

5. Cutting apparatus according to claim 4, **characterised in that** the piston base (32) has an orbiting annular groove (34) with seal (35) accommodated therein.

6. Cutting apparatus according to one of claims 4 or 5, **characterised in that** the piston base (32) is divided into two and consists of a piston shaft (36) and a seal bush (37) surrounding this piston shaft (36) on the outer side.

7. Cutting apparatus according to one of claims 1 to 6, **characterised in that** a restoring spring (6), which acts on the piston shaft (36), is arranged in the cylinder (13).

8. Cutting apparatus according to one of claims 1 to 7, **characterised in that** the movable and/or fixed blade (9, 10) has a rounded cutting contour (20).

9. Cutting apparatus according to claim 8, **characterised in that** two rounded cutting contours (25, 26) arranged one behind another, are arranged in longitudinal direction of the blades (9, 10).

10. Cutting apparatus according to one of claims 8 or 9, **characterised in that** the front rounded cutting contour (26) tapers off in a straight line towards the blade tip (28).

11. Cutting apparatus according to one of claims 8 to 10, **characterised in that** the rounding of the cutting contour (25, 26) is orientated to a radius (r₁, r₂), which corresponds to about one quarter to three quarters of the length of the blade (9, 10).

12. Cutting apparatus according to claims 1 to 7, **characterised in that** the movable blade (9) and/or the fixed blade (10) are ordered into two cutting regions (22, 23), which are subdivided by a projection (24) projecting into the cutting space (21).

13. Cutting apparatus according to claim 12, **characterised in that** the cutting region (23) assigned to the blade tip (28) is longer than the second cutting region (22).

## Revendications

1. Appareil de coupe (1), par exemple cisaille à câble, susceptible d'être actionné par un moteur, avec un tranchant (10) fixe et un tranchant (9) mobile, le tranchant (9) mobile étant entraîné hydrauliquement par un piston moteur (5), guidé dans un cylindre (13) stationnaire par rapport à l'appareil de coupe (1), le tranchant mobile (9) étant en outre maintenu mobile en rotation sur le tranchant fixe (10), en tournant autour d'un axe de pivotement (y) et le piston moteur (5) étant relié de façon articulée au tranchant mobile (9), **caractérisé en ce que** le piston moteur (5) n'est relié au tranchant mobile (9) qu'au moyen d'une liaison articulée (19) unique et qu'en partant de la liaison articulée (19), il se prolonge sous forme de barre (29) rigide dans un cylindre (13) récepteur, de sorte à réaliser au cours de son déplacement dans le cylindre (13), un déplacement en extension en direction radiale, par rapport à l'axe de pivotement (y).

2. Appareil de coupe selon la revendication 1, **caractérisé en ce que** l'articulation au tranchant mobile (9) est effectuée de manière que le piston moteur (5), en partant d'une position d'extrémité dans laquelle il n'est pas aligné avec un axe de cylindre (y), lors d'un déplacement à la position d'extrémité opposée, il effectue un déplacement en alignement avec l'axe de cylindre (x).

3. Appareil de coupe selon la revendication 1 ou 2, **caractérisé en ce que** le cylindre (13) est réalisé en deux parties, une partie (11) retenant le piston moteur (5) maintenant en même temps les tranchants (9, 10).

4. Appareil de coupe selon l'une des revendications 1 à 3, **caractérisé en ce que** le piston moteur (5) présente un fond de piston (32) supporté dans le cylindre (13) et présentant un contour (33) incurvé en direction axiale, prévu pour coopérer avec la paroi de cylindre (8).

5. Appareil de coupe selon la revendication 4, **caractérisé en ce que** le fond de piston (32) présente une gorge annulaire (34) de pourtour avec un joint d'étanchéité (35) logé à l'intérieur.

6. Appareil de coupe selon l'une des revendications 4 ou 5, **caractérisé en ce que** le fond de piston (32) est divisé en deux parties et est formé d'une tige de piston (36) et d'un pot d'étanchéité (37) entourant extérieurement cette tige de piston (36).

7. Appareil de coupe selon l'une des revendications 1 à 6, **caractérisé en ce que** dans le cylindre (13) est disposé un ressort de rappel (6) agissant sur la tige de piston (36).

8. Appareil de coupe selon l'une des revendications 1 à 7, **caractérisé en ce que** le tranchant mobile et/ou fixe (9, 10) présente un contour de coupe (20) arrondi.

9. Appareil de coupe selon la revendication 8, **caractérisé en ce que** deux contours de coupe (25, 26) arrondis situés l'un derrière l'autre sont disposés dans la direction longitudinale du tranchant (9, 10).

10. Appareil de coupe selon l'une des revendications 8 ou 9, **caractérisé en ce que** le contour de coupe avant (26) arrondi évolue de façon rectiligne par rapport à la pointe de tranchant (28).

11. Appareil de coupe selon l'une des revendications 8 à 10, **caractérisé en ce que** l'arrondi du contour de tranchant (25, 26) est orienté sur un rayon (r1, r2) correspondant à peu près à un quart jusqu'à trois quarts de la longueur du tranchant (9, 10).

12. Appareil de coupe selon les revendications 1 à 7, **caractérisé en ce que** le tranchant mobile (9) et/ou le tranchant fixe (10) sont articulés en deux zones de coupe (22, 23) subdivisées par une saillie (24) pénétrant dans l'espace de coupe (21).

13. Appareil de coupe selon la revendication 12, **caractérisé en ce que** la zone de tranchant (23) associée à la pointe de tranchant (28) est plus longue que la deuxième zone de tranchant (22).
